# EUROPÄISCHE PATENTANMELDUNG

(11) **EP 2 500 077 A1**
(43) Veröffentlichungstag der Anmeldung: **19.09.2012**
(21) Anmeldenummer: 11002229.0
(22) Anmeldetag: 17.03.2011
(51) Int. Cl.: B01D 39/08

(54) **Filterelement mit zwei Gewebeschichten**

(71) Anmelder: Sefar AG, 9410 Heiden (CH)
(72) Erfinder: Maurer, Christoph, 9425 Thal (CH)
(74) Vertreter: Wunderlich, Rainer

(57) **Zusammenfassung**

Die Erfindung betrifft ein Filterelement mit einem Stützgewebe und einem darauf angeordneten Filtergewebe. Das Filtergewebe ist als ein Feingewebe aus Monofilgarnen mit einem Fadendurchmesser bis 150 µm und das Stützgewebe aus Garnen gebildet, deren Durchmesser zumindest doppelt so groß wie der des Feingewebes ist. Die Kettfäden und die Schussfäden an der dem Feingewebe zugewandten Seite sind an bestimmten Stellen zum Bilden von Befestigungsbereichen abgeplattet, wobei das Feingewebe mit dem Stützgewebe an den Befestigungsbereichen verbunden ist.

## Beschreibung

Die Erfindung betrifft ein Filterelement mit einem Stützgewebe und einem darauf angeordneten Filtergewebe gemäß dem Oberbegriff des Anspruchs 1.

Stützgewebe für Filterelemente sind bekannt. Beispielsweise besitzen Filterelemente aus Nadelfilz zur Verbesserung der Festigkeit sowie der Stabilität in der Regel ein Stützgewebe, das beidseitig mit den Filzen vernadelt ist. Als Stützgewebe für Filterelemente in der Heißgasfiltration sind Gewebe aus Polyvinylensulfid in Form von Stapelfasern bekannt. In einem weiteren von Permeat durchströmten Filterelement, das in einer gefalteten Form eingesetzt wird, ruhen die Falten des Filterelements innen auf einer Lochzarge. Die einzelnen Falten werden durch das innenliegende Stützgewebe abgestützt, so dass das Permeat frei abströmen kann. Wird das Filterelement durchströmt, entsteht bedingt durch den Volumenstrom und die Viskosität des zu filtrierenden Mediums ein Differenzdruck an den Falten des balgförmigen Filterelements. Die resultierenden Kräfte werden vom Stützgewebe aufgenommen. Stützgewebe sind auch bekannt aus Filterschläuchen, die in Filterschlauchanlagen eingesetzt werden. Diese Filterschläuche werden durch Druckimpulse abgereinigt und somit mechanisch belastet. Auch hierbei werden die resultierenden Kräfte vom Stützgewebe aufgenommen.

Weist das auf dem Stützgewebe angeordnete Filtergewebe im Vergleich zum Stützgewebe eine sehr kleine Maschenweite auf, so kann sich die gröbere Struktur des Strukturgewebes auf das feiner strukturierte Feingewebe übertragen und die Planheit der Feingewebeseite damit verschlechtern. Andererseits wird bei einer feineren Struktur des Stützgewebes der Druckverlust erhöht und die Durchflussrate des Permeats reduziert. Um diesen Druckverlust auszugleichen und die Durchflussrate konstant zu halten, ist es notwendig, den Anfangsdruck zu erhöhen, wodurch die mechanische Belastung des Filterelementes erhöht wird und sich dadurch die Standzeit des Filterelementes verringert. Ferner werden bei einer zu kleinen Maschenweite des Strukturgewebes beim Verbinden mit dem Filtergewebe zu viele Maschenöffnungen verschlossen, wodurch der Druckverlust ebenfalls erhöht und der Durchfluss reduziert wird.

Der Erfindung liegt daher die **Aufgabe** zugrunde, ein Filterelement mit einem Stützgewebe und darauf angeordneten Filtergewebe bereitzustellen, bei dem sich eine hohe Stabilität und Festigkeit bei gleichzeitig hoher Durchflussleistung erreichen lässt.

Diese Aufgabe wird erfindungsgemäß mit einem Filterelement mit einem Stützgewebe und einem darauf angeordneten Filtergewebe mit den Merkmalen des Anspruchs 1 gelöst.

Vorteilhafte Ausführungen der Erfindung sind in den abhängigen Ansprüchen angegeben.

Das erfindungsgemäße Filterelement ist dadurch gekennzeichnet, dass das Filtergewebe als ein Feingewebe aus Monofilgarnen mit einem Fadendurchmesser bis 150 µm gebildet ist, und das Stützgewebe aus Garnen gebildet ist, deren Durchmesser zumindest doppelt so groß wie der des Feingewebes ist, wobei die Kettfäden und die Schussfäden an der dem Feingewebe zugewandten Seite an bestimmten Stellen zum Bilden von Befestigungsbereichen abgeplattet sind, und das Feingewebe mit dem Stützgewebe an den Befestigungsbereichen verbunden ist.

Ein Grundgedanke der Erfindung kann darin gesehen werden, ein Filterelement mit einem Stützgewebe und einem darauf angeordneten Filtergewebe bereitzustellen, bei dem eine sehr plane Oberfläche des gröberen Stützgewebes in Kett- und Schussrichtung erreicht wird, so dass die Oberflächenstruktur des auf dem Stützgewebe angeordneten Filtergewebes weitgehend ungestört und in der ursprünglichen Glätte erhalten bleibt. Aufgrund der Abplattung der Kettfäden und der Schussfäden an der dem Feingewebe zugewandten Seite zum Bilden von Befestigungsbereichen wird eine Minderung der Abnutzung des über dem Stützgewebe befindlichen Feingewebes durch Verringerung der Flächenpressung zwischen beiden erreicht. Durch eine geeignete Auswahl des Verhältnisses der Garndurchmesser von Stützgewebe zu Feingewebe von mindestens zwei zu eins sowie der Maschenweite kann das Stützgewebe den individuellen Erfordernissen der verschiedenen Filterelemente hinsichtlich der Durchflussleistung und der Steifigkeit angepasst werden. Ferner ergeben sich durch die Abplattung an bestimmten Stellen zum Bilden von Befestigungsbereichen verhältnismäßig große Flächenbereiche, an denen beispielsweise ein Klebstoff zum Verbinden des Feingewebes mit dem Stützgewebe in ausreichender Menge aufgetragen werden kann, um eine hohe Verbindungsstabilität zwischen den beiden Gewebearten sicherzustellen. Als Befestigungsbereiche sind insbesondere die Kreuzungspunkte sowohl der Kettfäden als auch der Schussfäden des Stützgewebes abgeplattet, da diese Punkte mechanisch stabil sind

Als Monofilgarne eignen sich insbesondere Kunststoffgarne, beispielsweise aus Polyester oder Polyamid. Diese Materialien weisen eine hohe mechanische und chemische Widerstandsfähigkeit auf und ermöglichen so eine verhältnismäßig lange Standzeit des Filterelementes. Ein Fadendurchmesser von bis 150 µm ermöglicht dabei zum Einen eine hinreichend kleine Maschenweite des Feingewebes, um auch zu filtrierende Medien mit einem feinteiligen Feststoffanteil zu filtrieren, und zum Anderen ist eine ausreichende mechanische Stabilität des Feingewebes gewährleistet.

In einer besonders bevorzugten Ausführungsform des erfindungsgemäßen Filterelementes sind das Stützgewebe und das Feingewebe mit einem Klebstoff, insbesondere einem Schmelzklebstoff oder einem reaktiven Klebstoff oder einem 2-Komponenten-Klebstoff, verbunden.

Schmelzklebstoffe sind lösungsmittelfrei und bei Raumtemperatur weitgehend feste Produkte, die im heißen Zustand auf die Klebefläche aufgetragen werden können, und beim Abkühlen die Verbindung herstellen. Diese auch als Hotmelts bekannte Gruppe von Klebstoffen basiert auf verschiedenen chemischen Rohstoffen. Besonders geeignet sind Basispolymere wie Polyamide, Polyethylen, amorphe Polyalphaolefine, Ethylenvinylacetatcopolymere, Polyesterelastomere, Polyurethanelastomere sowie Copolyamidelastomere. Die Applikationstemperatur dieser Schmelzklebstoffe liegt bevorzugt zwischen 140 bis 200°C, bei Polyamiden auch über 200°C. Daneben können auch Harze wie Terpene oder Kohlenwasserstoffharze eingesetzt werden. Um die Beständigkeit des Schmelzklebstoffes zu erhöhen, ist es zweckmäßig, ferner Stabilisatoren wie Antioxidantien, zum Beispiel Phenole oder Peroxidzersetzer, Metalldesaktivatoren, welche mit Metallionen Komplexe bilden, sowie Lichtschutzmittel einzusetzen. Zur Verbesserung der Konsistenz ist es zweckmäßig, zusätzlich wachsartige Verbindungen beizumischen. Darüber hinaus können Nukleierungsmittel zu Modifizierung teilkristalliner Kunststoffe zugegeben werden. Sie bewirken, dass die Kristallbildung bei einer höheren Temperatur eintritt und dadurch die Kristallstruktur optimiert wird. Der Anteil der einzelnen Komponenten bildet sich individuell nach den Haftungseigenschaften auf dem Stütz- sowie dem Feingewebe, der Verarbeitungstemperatur, der Wärmestandfestigkeit, der chemischen Beständigkeit und der Härte. Wesentliche Vorteile von Schmelzklebstoffen sind die einfache Anwendung, die Vermeidung von Lösungsmitteln, eine nahezu unbegrenzte Lagerbarkeit sowie ein vergleichsweise niedriger Preis. Zudem können Klebstoffreste durch Aufheizen verflüssigt und von den Oberflächen rückstandsfrei entfernt werden. Darüber hinaus ist eine Verklebung verschiedenster Materialien möglich, insbesondere können auch leicht poröse oder faserige Gewebeoberflächen verbunden werden. Zudem lassen sich mit Schmelzklebstoffen kleinere Unebenheiten von verklebten Oberflächen ausgleichen.

Aufgrund der Abplattung der Kettfäden und der Schussfäden des Stützgewebes an der dem Feingewebe zugewandten Seite an bestimmten Stellen kann der Klebeauftrag auf die notwendige Menge begrenzt werden.

Bei reaktiven Klebstoffen wird die Verfestigung durch chemische Reaktion der einzelnen Komponenten miteinander erreicht. Dabei werden bei 2-Komponenten-Klebstoffen zwei räumlich getrennte Zubereitungen eingesetzt, in welchen sich die Monomere als Grundbausteine des bei der Reaktion entstehenden Polymers befinden. Eine der beiden Zubereitungen enthält Harzmonomere oder auch Binder, während die andere Härter enthält. Als weitere Inhaltsstoffe oder Zubereitungen können Stabilisatoren, Thixotropiermittel, Beschleuniger, weitere Additive, Farb- oder Füllstoffe zum Einsatz kommen. Dabei ist es erforderlich, dass die beiden Komponenten vor der Applikation im korrekten Verhältnis intensiv vermischt werden. Mit dem Kontakt von Harz und Härter startet die chemische Reaktion zum Klebstoffpolymer. Die Aushärtezeit wird stark von äußeren Einflüssen, besonders der Temperatur, beeinflusst. Temperaturerhöhung führt zu einer beschleunigten Aushärtung und häufig auch zu einer höheren Festigkeit, während niedrigere Temperaturen die Aushärtezeit verlängern. Bei 1-Komponenten-Klebstoffen härtet der Klebstoff durch Veränderung der Umgebungsbedingungen aus. Dies kann beispielsweise durch Temperaturerhöhung, Zutritt von Luftfeuchtigkeit, Ausschluss von Luftsauerstoff oder Kontakt mit der Substratoberfläche geschehen. Besonders geeignet sind Polyurethan-Klebstoffe, welche als 1- oder 2-Komponenten-Klebstoffe erhältlich sind und durch Polykondensation oder Polyaddition aushärten können. Für besondere Anwendungsfälle können auch 3- oder Mehrkomponenten-Klebstoffe verwendet werden.

Es ist vorteilhaft, wenn der Klebstoff auf dem Stützgewebe und/oder dem Feingewebe punktförmig oder in einem Netzmuster aufgetragen ist. Der Klebstoffauftrag erfolgt auf die abgeplatteten Befestigungsbereiche.

Dadurch wird der Klebeauftrag auf das notwendige Maß limitiert, wobei bei einer gleichmäßigen Verteilung des Auftragsmusters auch eine hohe mechanische Verbindungsstabilität zwischen dem Stützgewebe und dem Feingewebe erreicht wird, da auftretende Kräfte gleichmäßig auf das gesamte Gewebe verteilt werden und somit eine hohe singuläre Belastung vermieden wird.

Bevorzugt beträgt die Maschenweite des Feingewebes 5 bis 75 µm, besonders bevorzugt 5 bis 150 µm. Damit ist zum Einen eine ausreichend hohe mechanische Stabilität des Filtergewebes gewährleistet und zum Anderen können auch Medien mit einem hinreichend kleinen Feststoffanteil filtriert werden.

Es ist zweckmäßig, wenn die Fadenzahl des Feingewebes 10 bis 240, besonders vorteilhaft 40 bis 240 Fäden pro Zentimeter beträgt.

Damit wird eine hinreichend hohe mechanische Stabilität des Feingewebes sichergestellt, um eine lange Standzeit des Filterelementes zu ermöglichen. Ferner können Fadendurchmesser von 24 µm bis 100 µm eingesetzt werden, welche herstellungstechnisch besonders einfach zu verarbeiten sind. Darüber hinaus können hinreichend kleine Maschenweiten von bis zu 5 µm erreicht werden.

Es ist bevorzugt, wenn die Gewebedicke des Feingewebes 40 bis 160 µm beträgt. Bei dieser Gewebedicke ist die notwendige mechanische Festigkeit des Feingewebes bei gleichzeitig möglichst geringem Druckverlust gewährleistet. Abhängig von der Materialart ergibt sich somit ein vorteilhaftes Gewebegewicht von 40 bis 100 g/m²_{.}

In einer weiteren bevorzugten Ausführungsform des erfindungsgemäßen Filterelementes beträgt die Maschenweite des Stützgewebes 300 bis 1.500 µm.

Dadurch kann eine ausreichend hohe Steifigkeit und mechanische Stabilität des Filterelementes gewährleistet werden, um lange Standzeiten zu erreichen. Ferner ist bei dieser Maschenweite der Druckverlust relativ gering und die Durchflussleistung ausreichend hoch, so dass kein hoher apparativer Aufwand, beispielsweise für Pumpeinrichtungen, notwendig ist. Zudem ergibt sich bei dieser Maschenweite eine ausreichend hohe Anzahl von Kreuzungspunkten zum Bilden von Befestigungsbereichen, an denen das Stützgewebe mit dem Feingewebe verbunden werden kann.

Es ist vorteilhaft, wenn die Fadenzahl des Stützgewebes 5 bis 30 Fäden pro Zentimeter beträgt. Mit dieser Fadenzahl kann bei einer Maschenweite von 300 bis 1.500 µm ein bevorzugter Fadendurchmesser von 200 bis 800 µm gewählt werden. In diesem Durchmesserbereich ist einerseits eine ausreichend hohe Flexibilität sowie andererseits die notwendige mechanische Festigkeit gegeben. Darüber hinaus kann dadurch das Verhältnis der Durchmesser der Fäden des Stützgewebes zu denen des Feingewebes in einem vorteilhaften Verhältnis von zwei zu eins oder größer gewählt werden. Dies gewährleistet sowohl die Funktion des Stützgewebes einer mechanischen Stabilisation des Filterelementes sowie die Filtrationsfunktion des Feingewebes.

Zweckmäßigerweise beträgt die Gewebedicke des Stützgewebes 180 bis 700 µm. In diesem Bereich werden die beiden konkurrierenden Parameter, mechanische Stabilität des Stützgewebes sowie ein niedriger Druckverlust beziehungsweise eine hohe Durchflussleistung, am effektivsten miteinander zu kombinieren. In Abhängigkeit von der gewählten Materialart des Stützgewebes ergibt sich hierbei ein bevorzugtes Gewebegewicht von 100 bis 500 g/m².

Es ist vorteilhaft, wenn die Abplattung der Kettfäden und der Schussfäden zum Bilden der Befestigungsbereiche mindestens 35 % beträgt.

Dadurch wird eine halbschalenartige Geometrie des Stützgewebes erreicht, wodurch die Abströmung des Filtermediums optimiert und Reinigungsprozesse erleichtert werden, da keine Totzonen auftreten, in denen Restfluidanteile verbleiben können. Ferner werden bei diesem Abplattungsgrad eine deutliche Limitierung des Klebeauftrages auf die glatten Stützgewebeflächen sowie eine relativ glatte Oberfläche des groben Stützgewebes in Kett- und Schussrichtung erreicht. Diese Abplattung kann insbesondere durch ein Kalandrierungsverfahren bewirkt werden.

Das erfindungsgemäße Filterelement eignet sich insbesondere zur Verwendung als Bandfilter für die Filtration von Kühlschmiermitteln sowie als Filtergewebe für Scheibenfilter zur Wasserfiltration.

Die Erfindung wird nachfolgend anhand eines bevorzugten Ausführungsbeispiels näher erläutert, welches in der beigefügten schematischen Zeichnung dargestellt ist.

In dieser Zeichnung zeigt:

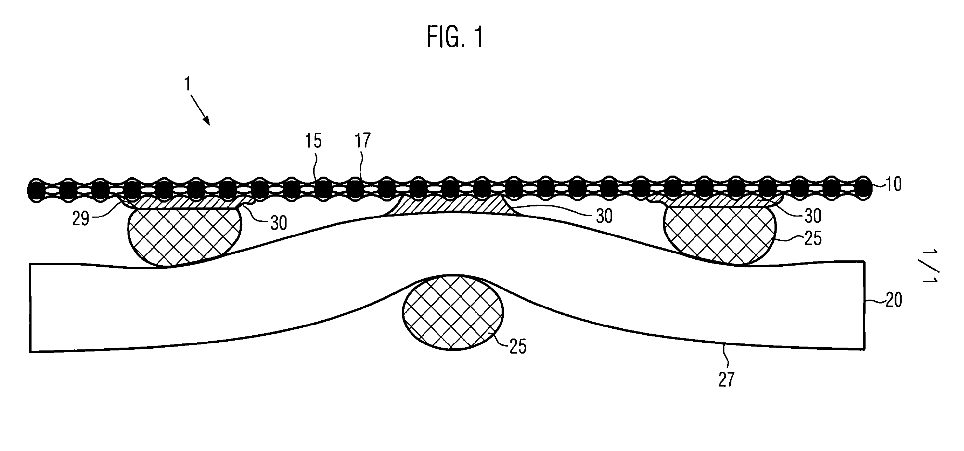

- Fig. 1: eine vergrößerte Querschnittsansicht eines erfindungsgemäßen Filter-elementes.

In Fig. 1 ist ein erfindungsgemäßes Filterelement 1 in einer vergrößerten Querschnittsansicht dargestellt. Das Filterelement 1 wird aus einem groben Stützgewebe 20 und einem Filtergewebe 10, das als Feingewebe ausgebildet ist, gebildet. Das Stützgewebe 20 besteht aus längsverlaufenden Schussfäden 27 sowie quer hierzu verlaufenden Kettfäden 25. Analog wird das feine Filtergewebe 10 durch Kettfäden 15 sowie Schussfäden 17 gebildet. Die Kett- 25 und Schussfäden 27 des Stützgewebes 20 weisen dabei einen deutlich größeren Durchmesser auf als die Kettfäden 15 und Schussfäden 17 des Filtergewebes 10. Die Kettfäden 15 und die Schussfäden 27 des Stützgewebes 20 sind an der dem Filtergewebe 10 zugewandten Seite an den Kreuzungspunkten zum Bilden von Befestigungsbereichen 29 abgeplattet. Auf diesen abgeplatteten Befestigungsbereichen 29 ist ein Klebstoff 30 aufgetragen, welcher das Stützgewebe 20 mit dem Filtergewebe 10 verbindet. Deutlich zu erkennen ist die halbschalenartig ausgebildete Geometrie des Stützgewebes 20.

## Patentansprüche

1. Filterelement mit einem Stützgewebe (20) und einem darauf angeordneten Filtergewebe (10),
**dadurch gekennzeichnet,**
**dass** das Filtergewebe (10) als ein Feingewebe aus Monofilgarnen mit einem Fadendurchmesser bis 150 µm gebildet ist,
**dass** das Stützgewebe (20) aus Garnen gebildet ist, deren Durchmesser zumindest doppelt so groß wie der des Feingewebes (10) ist,
**dass** die Kettfäden (25) und die Schussfäden (27) des Stützgewebes (20) an der dem Feingewebe (10) zugewandten Seite an bestimmten Stellen zum Bilden von Befestigungsbereichen (29) abgeplattet sind, und
**dass** das Feingewebe (10) mit dem Stützgewebe (20) an den Befestigungsbereichen (29) verbunden ist.

2. Filterelement nach Anspruch 1,
**dadurch gekennzeichnet,**
**dass** das Stützgewebe (20) und das Feingewebe (10) mit einem Klebstoff (30), insbesondere einem Schmelzklebstoff oder einem reaktiven Klebstoff oder einem 2-Komponenten-Klebstoff, verbunden sind.

3. Filterelement nach Anspruch 2,
**dadurch gekennzeichnet,**
**dass** der Klebstoff (30) auf dem Stützgewebe (20) und/oder dem Feingewebe (10) punktförmig oder in einem Netzmuster aufgetragen ist.

4. Filterelement nach einem der Ansprüche 1 bis 3
**dadurch gekennzeichnet,**
**dass** die Maschenweite des Feingewebes (10) 5 bis 150 µm beträgt.

5. Filterelement nach einem der Ansprüche 1 bis 4,
**dadurch gekennzeichnet,**
**dass** die Fadenzahl des Feingewebes (10) 40 bis 240 Fäden pro cm beträgt.

6. Filterelement nach einem der Ansprüche 1 bis 5,
**dadurch gekennzeichnet,**
**dass** die Gewebedicke des Feingewebes (10) 40 bis 160 µm beträgt.

7. Filterelement nach einem der Ansprüche 1 bis 6,
**dadurch gekennzeichnet,**
**dass** die Maschenweite des Stützgewebes (20) 300 bis 1.500 µm beträgt.

8. Filterelement nach einem der Ansprüche 1 bis 7,
**dadurch gekennzeichnet,**
**dass** die Fadenzahl des Stützgewebes (20) 5 bis 30 Fäden pro cm beträgt.

9. Filterelement nach einem der Ansprüche 1 bis 8,
**dadurch gekennzeichnet,**
**dass** die Gewebedicke des Stützgewebes (20) 180 bis 700 µm beträgt.

10. Filterelement nach einem der Ansprüche 1 bis 9,
**dadurch gekennzeichnet,**
**dass** die Abplattung der Kettfäden (25) und der Schussfäden (27) zum Bilden der Befestigungsbereiche (29) mindestens 35% beträgt.
